# EUROPEAN PATENT APPLICATION

(11) **EP 3 034 226 A1**
(43) Date of publication of application: **22.06.2016**
(21) Application number: 14198825.3
(22) Date of filing: 18.12.2014
(51) Int. Cl.: B23K 11/11, B32B 15/00, B32B 3/30, B23K 11/16, B23K 26/32

(54) **Method for manufacturing a sandwich panel**

(71) Applicant: Outokumpu Oyj, 02200 Espoo (FI)
(72) Inventor: Fröhlich, Thomas, 40878 Ratingen (DE); Lindner, Stefan, 47877 Willich (DE)
(74) Representative: Aarnio, Hannu Aatto Aulis

(57) **Abstract**

The invention relates to a method for manufacturing a sandwich panel where a non-metallic material (2,12) is positioned between two metallic layers (1,3; 11,13). At least one of the metal layers (1,3; 11,13) is shaped into a three dimensional layer (3,13), and the metal layers (1,3; 11,13) and the non-metallic layer (2,12) are joined to each other by means of a mechanical contact achieved between the metal layers (1,3; 11,13).

## Description

The present invention relates to a method for manufacturing a sandwich panel where a non-metallic material is positioned between two metallic layers.

Sandwich panel structures can be fabricated from a wide variety of metallic, polymeric or composite materials. Many sandwich panel structures are found to reduce weight as well as noise and to provide adequate stiffness and strength for a structural load support. Sandwich panels with the core relative densities of 2-10 % and cell sizes in the millimetre range are assessed for use as multifunctional structures. The open and three-dimensional pore networks of lattice supporting structures create opportunities for simultaneously supporting high stresses and also cross flow heat exchange.

The JP publication H01-127125 describes a method for manufacturing a sandwich panel containing two sheet metal layers and one corrugated element. Spot welding is used to fit the first sheet metal layer to one surface of a corrugated strip. A pair of press roller machines is used to fit the second sheet metal layer to the second surface of the corrugated strip by pressurizing and bonding.

The US patent application 2013-273387 relates to high-frequency welding of sandwich metal sheets. Accordingly, a first composite sheet metal part comprising at least two metal sheets and a sheet arranged between both metal sheets that consists of a material with a different composition than the two metal sheets is welded to a second sheet metal part consisting of a solid metallic material or a further composite material with at least two metal sheets and a sheet arranged between the metal sheets that consists of a material with a different composition than the two metal sheets.

Based on these publications, sandwich panels, which are a combination of two essentially flat metal layers and a non-metallic interlayer, are already known. The disadvantage of this kind of a sandwich panel is that the non-metallic layer isolates electrically metal layers. This makes very difficult to weld the sandwich layers with other materials.

The object of the present invention is to prevent some drawbacks of the prior art and to achieve an improved method for manufacturing a sandwich panel with two metal layers and a non-metallic layer between the metal layers. In the method spot welding or other welding processes are used because of the achievement of a mechanical contact between the metal layers. The essential features of the present invention are enlisted in the appended claims.

In accordance with the present invention a sandwich panel is manufactured from at least two metal layers and a non-metallic layer positioned between the metal layers. At least one of the metal layers is shaped being a three dimensional object. The metal layers are attached to each other by welding, advantageously by spot welding. For the sake of clarity, when speaking about the metal layers in this specification, the metal layer being two dimensional is called as the first metal layer and the three dimensional metal layer is called as the second metal layer.

The non-metallic layer according to the invention is positioned essentially in the valley of the second metal layer. The metallic peaked surface of the second metal layer is essentially in direct mechanical contact with the first metal layer. The direct mechanical contact between the first metal layer and the second metal layer also ensures an electrical contact. The electrical contact further makes possible to use in welding of the two metal layers spot welding or electrical welding processes. The form and density give for these panels their mechanical, stiffness, sound, joining and process features.

The first and second metal layers in the manufacture of a sandwich panel according to the invention are advantageously made of the same material, such as stainless steel, carbon steel, but the first and second metal layers can also be made of different metals or different metal compositions. When using different metals or different metal compositions the combination of these metals can further alter the behaviour of the sandwich panel. For instance, a combination of metals with different thermal expansion coefficients can be advantageous in some solutions of the present invention. By using two metals with two different thermal expansion coefficients can influence the thermal expansion of the sandwich panel, and the surface of the three-dimensional sheet will avoid disruption in the welded areas of the sandwich panel. Further, in the connection of the mechanical joining of the metal layers the non-metallic material between the two metal layers can also be bond chemically with the two metal layers, thus giving for the metal layers more stability and force transmission capability.

The second metal layer in the manufactured sandwich panel of the invention is a corrugated metal piece, a metal piece in the shape of knobs, nubs on the surface of the second metal layer, or any other three dimensional metal piece which is mechanically connectable with the essentially flat two-dimensional first metal layer. Suitable shapes for the second metal layer are found for instance in the WO publication 2014/096180. The form of the second metal layer also determines stiffness and weldability of the sandwich panel. In the case that the shape of the second metal layer is corrugated and dependent on the solution where the sandwich panel is utilized, the second metal layer can have a shape of an essentially sinusoidal wave, or the second layer can have a shape of a corrugated strip where the two parts of the strip next to each other are in the essentially perpendicular position to each other. Also other shapes of a corrugated strip can be used for the second layer in the sandwich panel manufactured according to the invention.

The second metal layer for the sandwich panel of the invention can also be made of metal layer elements where two elements next to each other are advantageously connected in their lower edges in the vertical direction so that a groove, being divergent upwards in the vertical direction, is formed between these two elements. The second metal layer can further be made of metal layer elements where the two elements next to each other are spaced apart in their vertically lower parts in a desired distance, but which distance is divergent to the surfaces of the elements when going upwards in the vertical direction. In addition, the metal layer elements can be provided in their upper parts in the vertical direction with a member which is used to achieve a mechanical contact with the first metal layer of the sandwich panel.

The non-metallic layer between the two metal layers in the sandwich panel of the invention are advantageously made of polymer material, resin material, cold and thermosetting one and two component adhesive glues for instance a crash-resistant one component adhesion glue used in the automotive industry.

When manufacturing the sandwich panel in accordance with the method of the present invention the second metal layer, consisting of a continuous metal piece or of metal layer elements, is preferably placed in an essentially horizontal position. Naturally any position between an essentially horizontal position and an essentially vertical position can be used. In the case when the second metal layer is placed in an essentially horizontal position the material for the non-metallic layer is embedded on the upper surface of the second metal layer on those parts, which parts are at the lower position to the vertical direction of the surface of the second metal layer. The total amount of the material for the non-metallic layer is such that at the maximum of 80 %, preferably at the maximum of 90 %, most preferably at the maximum of essentially 100 % of the upper surface of the second metal layer is covered with the material for the non-metallic layer. The coverage of at the maximum of essentially 100 % is achieved when the parts of the second metal layer being the uppermost in the vertical direction are able to perforate the non-metallic layer material during the pressure phase of the joining, such as welding. The upper parts of the surface of the second metal layer in the vertical direction are clean about the non-metallic layer material. This area clean of the non-metallic layer on the surfaces of the second metal layer achieves a mechanical contact between the metal layers in the manufacture of the sandwich panel.

The first metal layer is transferred for the manufacturing of the sandwich panel in accordance with the invention so that the first metal layer is positioned in the vertical direction above the second metal layer and thus also above the non-metallic layer. The mutual position between the first metal layer and the second metal layer is advantageously such, that the non-metallic layer is transversely arranged to these two metal layers. A mechanical contact is achieved between the first metal layer and the second metal layer. The mechanical contact is achieved on that area of the upper surface of the second metal layer which is not covered with the non-metallic layer, the uppermost parts of the second metal layer in the vertical direction being able to perforate the non-metallic layer material or by means of a particular member which is positioned on the upper part of the second metal layer.

The first metal layer and the second metal layer in the sandwich panel of the invention is attached to each other so that welding will be focused on the points where the first metal layer and the second metal layer has a structural mechanical contact to each other, or where the mechanical contact has been achieved during the pressure phase of the joining, such as welding. The mechanical contact between two metal surfaces makes available different kinds of ways to have a joint between those surfaces. The joining between the first metal layer and the second metal layer is advantageously carried out by welding, but also other joining methods can be used such as riveting, bolting. Further, it is advantageous that the non-metallic part can be hardened during the manufacturing process of the sandwich panel or after the manufacturing of the sandwich panel.

The welding of the first metal layer and the second metal layer to each other can be carried out as a spot welding, projection welding, buckle plate welding, injection welding or roller welding as resistance welding processes. Also other welding processes can be utilized such as micro-plasma welding and laser micro welding as well as seam welding processes such as electron beam welding and laser beam welding.

The sandwich panel in accordance with the invention is further structured so that the sandwich panel can be joined to a desired material piece in order to connect the sandwich panel to a complete structure such as car body.

The invention is described in more details referring the following drawings where
Fig. 1 illustrates one preferred embodiment of the invention in a schematic manner as a side view, and
Fig. 2 illustrates one another preferred embodiment of the invention in a schematic manner as a side view.

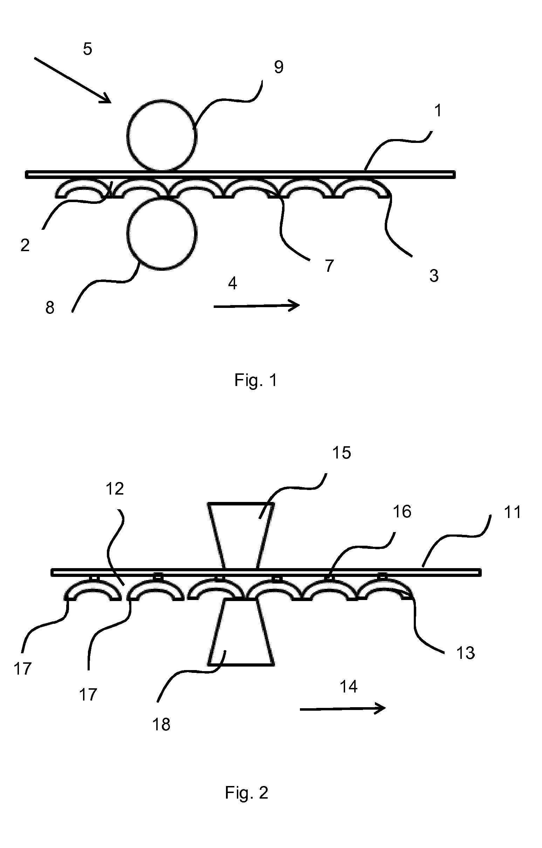

According to the Fig. 1 a flat metal layer 1, a polymer layer 2 and the three dimensional metal layer 3 are transferred to the direction marked by the arrow 4 into a wheel resistant welding machine 5. The three dimensional metal layer 3 consists of elements 7 which are positioned to each other so that the mutual distance of the upper surfaces of the two adjacent elements 7 are divergent towards the flat metal layer 1. The polymer layer 2 is positioned on the upper surfaces of the elements 7. In the welding machine the metal layers 1 and 3 are welded to each other by means of the upper welding wheel 8, and the elements of the three dimensional metal layer 3 are welded together with the lower welding wheel 9.

In Fig. 2 the flat metal layer 11, a polymer layer 12 and the three dimensional metal layer 13 are similar to the layers described in connection with the description of Fig. 1. The layers 11, 12 and 13 are transferred to direction illustrated as an arrow 14. The layers 11 and 13 are welded to each other by spot welding 15 using the mutual mechanical contact achieved with the member 16 of the three dimensional metal layer 13 and the surface of the flat metal layer 11. The elements 17 of the three dimensional metal layer 13 are simultaneously spot welded together using the spot welding 18 below the three dimensional metal layer 13.

## Claims

1. Method for manufacturing a sandwich panel where a non-metallic material is positioned between two metallic layers, **characterized in that** at least one of the metal layers (1,3; 11,13) is shaped into a three dimensional layer (3,13), and the metal layers (1,3; 11,13) and the non-metallic layer (2, 12) are joined to each other by means of a mechanical contact achieved between the metal layers.

2. Method according to the claim 1, **characterized in that** for the mechanical contact between the metal layers the three dimensional layer (3,13) is covered with the non-metallic layer (2,12) at the maximum of 80 %, preferably at the maximum of 90 %, most preferably at the maximum of essentially 100 %.

3. Method according to the claim 1, **characterized in that** for the mechanical contact between the metal layers the three dimensional layer (3,13) is provided with a mechanical member (16).

4. Method according to the claim 1, **characterized in that** the mechanical contact between the metal layers (1,3; 11,13) is achieved with the parts of the three dimensional layer (3,13) being the uppermost in the vertical direction of the three dimensional layer surface (3,13) by perforating the non-metallic layer material (2,12) during the pressure phase of the joining.

5. Method according to any of the preceding claims 1 to 4, **characterized in that** the three dimensional layer (3,13) is a corrugated metal strip.

6. Method according to any of the preceding claims 1 to 4, **characterized in that** the three dimensional layer (3,13) is a metal piece in the shape of knobs, nubs on the surface of the three dimensional layer.

7. Method according to any of the preceding claims 1 to 6, **characterized in that** the three dimensional layer (3,13) is made of metal layer elements (7,17) where the two elements next to each other are spaced apart in their vertically lower parts in a desired distance and which elements (7,17) are joined to each other during joining the metal layers to each other.

8. Method according to any of the preceding claims 1 to 7, **characterized in that** the metal layers (1,3; 11,13) are made of the same metal.

9. Method according to any of the preceding claims 1 to 7, **characterized in that** the metal layers (1,3; 11,13) are made of different metal compositions.

10. Method according to the claim 8, **characterized in that** the metal layers (1,3; 11,13) are made of two metals with two different thermal expansion coefficients influencing the thermal expansion of the sandwich panel.

11. Method according to any of the preceding claims 1 to 10, **characterized in that** stiffness and weldability of the panel is determined by the shape of the three-dimensional layer (3,13).

12. Method according to any of the preceding claims 1 to 11, **characterized in that** the metal layers (1,3; 11,13) are joined to each other by welding.

13. Method according to any of the preceding claims 1 to 12, **characterized in that** the metal layers (1,3; 11,13) are joined to each other by spot welding (15,18).

14. Method according to any of the preceding claims 1 to 12, **characterized in that** the metal layers (1,3; 11,13) are joined to each other by resistance roller welding (5).

15. Method according to any of the preceding claims 1 to 12, **characterized in that** the metal layers (1,3; 11,13) are joined to each other by resistance injection welding.

16. Method according to any of the preceding claims 1 to 12, **characterized in that** the metal layers (1,3; 11,13) are joined to each other by laser welding.

17. Method according to any of the preceding claims 1 to 12, **characterized in that** the metal layers (1,3; 11,13) are joined to each other by micro-plasma welding.

18. Method according to the claim 1, **characterized in that** the non-metallic material (2,12) between the two metal layers (1,3; 11,13) is bond chemically with the two metal layers (1,3; 11,13) in the connection of the mechanical joining of the metal layers (1,3; 11,13).
